# EUROPEAN PATENT SPECIFICATION

(11) **EP 1 993 261 B1**
(45) Date of publication and mention of the grant of the patent: **12.12.2012**
(21) Application number: 08101331.0
(22) Date of filing: 06.02.2008
(51) Int. Cl.: H04L 29/06, G06Q 30/02, H04N 7/16, H04L 29/08, H04L 12/18, H04N 21/258, H04N 21/442, H04H 60/06, H04N 21/84, H04N 21/262, H04N 21/81, H04N 21/24, H04N 21/61, H04N 21/2668

(54) **Method and system for scheduling of messages**
Verfahren und System zur Planung von Nachrichten
Procédé et système pour programmer des messages

(30) Priority: 16.05.2007 GB 0709426
(43) Date of publication of application: 19.11.2008
(73) Proprietor: Apple Inc., Cupertino, CA 95014 (US)
(72) Inventor: Ala-Pietilä, Pekka, 00170, Helsinki (FI)
(74) Representative: Barton, Russell Glen

(56) References cited:
- WO-A-02/44834
- US-A- 5 752 238

## Description

### Field of the Invention

The present invention relates generally to scheduling the transmission of messages to a recipient in a communications network, and is particularly, but not exclusively, suited to the transmission of messages in a communications network.

### Background of the Invention

Services for sending messages to mobile devices in a mobile communication network are widely used. Mobile communications networks can be used to send and receive various types of messages including electronic mail ("e-mail") messages, voice messages, video messages, picture messages, and text messages. For example, popular messaging services in the GSM network (Global System for Mobile Communications) are the Short Message Service (SMS) and Multimedia Message Service (MMS). The messages are typically sent and received with a recipient terminal such as a mobile telephone or a Personal Digital Assistant (PDA). Communication networks in general are of course also used for voice and video communications between two people or between groups of people.

Mobile marketing is considered by advertisers as an important new channel to reach direct to the recipient by utilizing the core assets and characteristics of the known mobile communications systems: these systems being personal, "always on", mobile and naturally forming groups of people who communicate actively with each other.

In general, mobile marketing and advertising can be divided into the following four categories:
Mobile Marketing: The systematic planning, implementing and control of a mix of business activities intended to bring together buyers and sellers for the mutually advantageous exchange or transfer of products where the primary point of contact with the recipient is via their mobile device.

Mobile Advertising: The paid, public, non-personal announcement of a persuasive message by an identified sponsor; the non-personal presentation or promotion by a firm of its products to its existing and potential customers where such communication is delivered to a mobile phone or other mobile device. Examples of mobile advertising would include: Wireless Application Protocol (WAP) or Web Banner ads, mobile search advertising, mobile video bumpers, and interstitial ads on device portals.

Mobile Direct Marketing: Sales and promotion technique in which the promotional materials are delivered individually to potential customers via the potential customer's mobile phone or other mobile device. Examples of mobile direct marketing include the sending of SMS, MMS or WAP push messages, Bluetooth messaging and other interrupt based marketing to mobile phones or other mobile devices.

Mobile customer relation management (CRM): Combination of all the above in a manner that establishes a long-term, engaging relationship between the customer and the promoting company.

Today's mobile marketing is usually mostly based on push campaigns to opt-in recipient mobile number database, or pull campaigns that acquire mobile phone numbers from recipients. The most typical example of the pull campaign is the "text-to-win" campaign where, e.g., a soft drink bottle contains a short code to be sent via text message to a certain number. In return, the recipient receives a notification if they have won with the selected marketing message or series of messages being broadcasted to their mobile phones. Other popular method is direct advertisement done using text and picture messaging.

The concept of channels is familiar in the context of television and radio broadcasting. There are dedicated channels such as sports channels, music channels, news channels cartoon channels etc. This type of channel structure makes it easy for advertisers to target their messages to target audiences simply by selecting a channel in which to advertise. In a mobile device which is not primarily used for consuming entertainment content it is more challenging to provide a channel-like experience for advertisement or any other type of content. A further problem is that it would be desirable to ensure that a recipient does not receive an excessive number of messages in a given time.

WO 02/44834 A2 discloses the routing of promotion content files to groups of end node devices having similar device attributes, wherein promotion schedules are generated. US 5,752,238 discloses the distribution of promotion content on a per user basis considering personal profile data of the end-user.

### Summary

In accordance with aspects of the present invention, there are provided methods, a computer program product, a computer-readable medium and a system according to the appended claims.

The invention provides a scheduling process and apparatus which may include constraints which determine the amount of messaging events available in a particular category (e.g. sports, music, food content) in a particular time period, for example on a particular day (or perhaps even within smaller time periods, such as afternoon/morning slots or even hourly slots). The messaging events are selectable from an inventory of such events, and the amount allocated per category may vary according to the time period - so that, for example, Monday may be "Music Day", during which the content will be predominantly music-related. By having a variation period-by-period, e.g. day-by-day (or according to other slots) over a weekly (or other) period then the recipient becomes more familiar with, and involved in, receiving the message content. As the recipient understands the periodic formatting, they will come to expect a particular type of message content at a particular time, or at least during a particular period or timing characteristic.

The invention is particularly useful in an advertising context, since by familiarising a recipient with the type of content they may come to expect, the recipient tends to become more receptive to receipt of the advertising content.

The method may include, once a particular item of message content is scheduled for transmission, identifying at least one recipient to receive the item of message content, selecting one or more message transmission rules on the basis of the schedule and processing the, or each, selected rule on the basis thereof so as to conduct message transmission. The message transmission rules can be dependent on any one or some of: schedule data identifying times allocated for message transmission in the schedule; monitoring data identifying previously actions taken by the recipient in response to previously transmitted messages; recipient profile data identifying preferred times for message transmission; and/or availability of network resources. The method can thus be used ensure that messages are received by a recipient at a time that is preferred by the message scheduler, and/or convenient to the recipient, and/or when the appropriate network resources are available.

The recipients for a particular item of message content can be selected on the basis of recipient preferences and/or previously observed actions taken by the recipient in response to previously transmitted messages. This aspect of the invention is useful when the messages are advertising messages, if the objective is to target the messages most effectively. The selection process can involve correlating recipient profile data with the categories of said stored content data items.

Further features and advantages of the invention will become apparent from the following description of preferred embodiments of the invention, given by way of example only, which is made with reference to the accompanying drawings.

### Brief Description of the Drawings

Figure 1 is a schematic block diagram showing a communications system arranged to support embodiments of the invention;
Figure 2 is a schematic block diagram showing components of the scheduling server shown in Figure 1;
Figure 3 is a schematic diagram showing an exemplary daily variation in schedule allocations for a particular category of message content, according to an embodiment of the invention; and
Figure 4 is a schematic flow diagram showing the steps involved in a scheduling process according to an embodiment of the invention.

### Detailed Description of the Invention

Embodiments of the invention are concerned with a method and system for scheduling the transmission of messages. The nature of the scheduling and the criteria relating thereto are described in detail later, but first a description of the infrastructure needed to support embodiments of the invention will be presented.

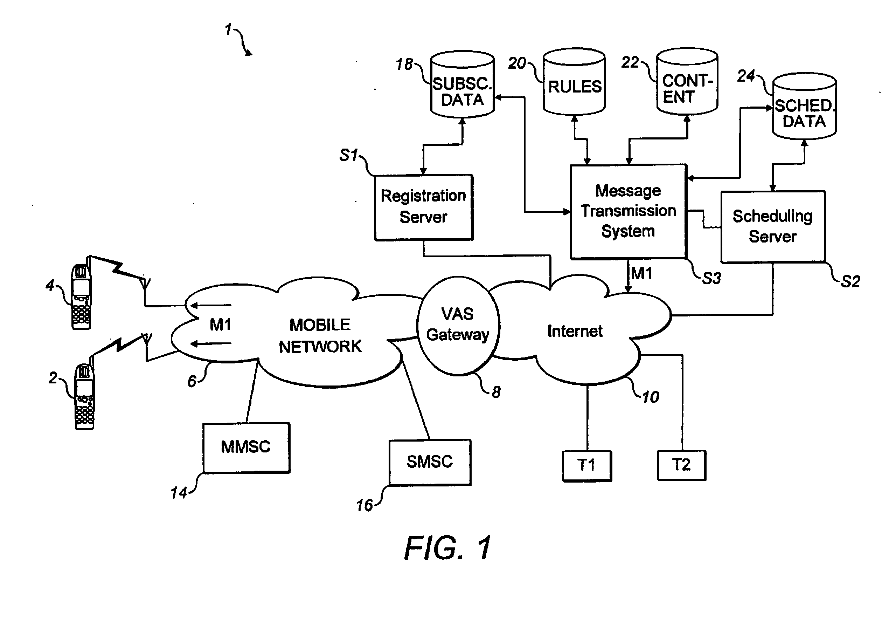

Figure 1 shows an example of a communications system 1 including a communications network 6, which may be any network which enables delivery of data or services. Examples of suitable communications networks include, but are not limited to, a second Generation (2G) network utilizing Global System for Mobile Communications (GSM), a 2.5 Generation network, a third Generation (3G) network utilizing Wideband Code Division Multiplex Access (WCDMA), Code Division Multiplex Access (CDMA), or Time Division Multiplex Access (TDMA), a network using Wireless Local Area Networks (WLAN), a broadcast network such as Digital Video Broadcasting for Handheld (DVB-H), MediaFlo, Terrestial Integrated Services Digital Broadcasting (ISDB-T), Digital Multimedia Broadcasting (DMB), a broadcast-over-cellular network, fixed or wireless Internet connections, WiMax or other access technologies. Communications network 6 may be a combination of several types of the above networks, for example, one including WLAN and GPRS connectivity.

Services, i.e. communication events, used by recipients to the network 6 can be voice, messaging services (Short Message Service, Multimedia Message Service, instant message services, e-mail services), video telephony services, push to talk services, data services such as Internet or Wireless Application Protocol (WAP) browsing services, content usage (television, radio, video) services, download services. These services or some of the services may be provided in return for a recipient opting-in to receive a certain number of advertising messages in certain scheduled periods. This corresponds with an inventory of messages set by the periodic limit of messaging events set for each of the recipients, which is preferably a daily limit. For example, the daily limit can be set at a threshold which is under 10 messaging events. More preferably, the daily limit is set at a threshold which is under 5 messaging events, for example a limit of four messaging events per recipient; the value at which the threshold is set can be dependent on message metering constraints for example.

In some embodiments, the advertising messages are transmitted in the form of short message service messages (SMS). It will be appreciated that other message types, such as multimedia message service (MMS), e-mail messages, bespoke messages in the form of GPRS data and/or streamed data and voice messages and/or streamed or downloaded video, audio (for example music) and voice messages, can alternatively be scheduled according to some embodiments of the invention, and that the specific arrangement of the communications system 1 is dependent on the type of message being transmitted.

In the arrangement shown in Figure 1, a terminal 2 communicates with various network devices within the communications system 1 via the communications network 6, which may comprise: a conventional radio and switching network comprising base stations; switches arranged in a conventional manner; and a home location register (HLR) for maintaining data relating to subscribers of the network. The communications network 6 also comprises store-and-forward message servers MMSC, SMSC 14, 16 configured to store and forward messages to terminals. The terminal 2 may be a wireless terminal such as a mobile telephone or a PDA. The communications system 1 may also comprise a value added services (VAS) gateway 8, a registration server S1, a scheduling system S2 and a message transmission system S3. The VAS gateway 8 can be for example a dedicated server unit arranged to connect a mobile network to a public network such as the Internet; such an Internet Gateway, GGSN (Gateway GPRS Support Node) or VAS can comprise functionality needed to transmit, receive and/or process information to/from recipients and advertisers. The registration system S1 can be accessed by a recipient via Web access for example via a fixed or wireless line terminal T1, typically connected to the Internet 10. The terminal T1 can be e.g. a desktop computer or mobile terminal with Internet browsing capabilities, and the registration service server S 1 can be accessed by actuating a URL corresponding to the server S 1. The scheduling server S2 is accessed via a message scheduler via Web access for example via a fixed line or wireless terminal T2, typically connected to the Internet 10. The terminal T2 can be e.g. a desktop computer, and the scheduling server S2 can be accessed by actuating a URL corresponding to the scheduling server S2. In addition the communications system 1 comprises a recipient database 18, a message transmission rules database 20, message content database 22 and scheduling database 24.

Recipient database 18 contains information such as demographics, sex, age, brand preferences, etc. and one or more categories of message content in which a recipient has expressed an interest, either expressly when registering or implicitly through monitored actions, such as responding to a message of a particular category.

Message content database 22 stores message content (data representing text, pictures, audio, video, html, etc.) for transmission. Message scheduling database 24 stores data defining message scheduling preferences associated with items of message content such as time, day, target group, target feedback level, target communication context and category to correspond to a target channel in which the message is to be presented, together with schedules of message transmission times.

In some embodiments of the invention it is assumed that the recipient of the terminal 2 is a subscriber of the communications network, and that subscribers have entered data indicative of their demographic data, preferences and interests, these data being received and stored by the registration server S1 in the recipient database 18.

Broadly speaking, there are two aspects to the present invention, each having embodiments relating to one of two independently operable but related processes. The first is a scheduling control process performed by the scheduling server S2 in respect of message content to be transmitted to a plurality of recipients. The second process is message transmission, which involves the actual transmission of the messages to individual recipients according to the schedule which has been generated and according to a set of message transmission rules held in the rules database 20.

The message content database 22 is populated with content data from message originators such as advertisers and the like. The message originators may remotely upload message content to the content database 22 once a schedule has been set for the message content, using the scheduling server S2.

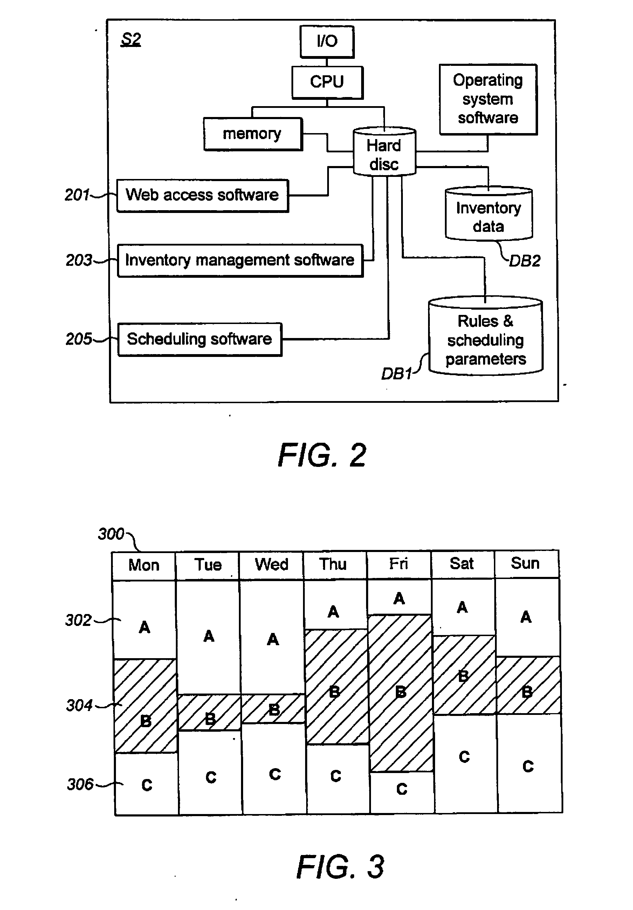

Turning now to Figure 2, the functionality of the scheduling server S2 will be described in more detail: in addition to standard CPU, memory, data bus, Input/Output ports, data storage, and operating system programs, the server S2 comprises various bespoke software components web access software 201, inventory management software 203, and scheduling software 205, all of which cooperate so as to determine a schedule for message transmission. The web access software provides a remote recipient interface which can be used by a third party, such as an advertising buyer, to access the scheduling server S2 and insert scheduling data into the schedule held therein, by scheduling the transmission of message content in a selected period, e.g. on a selected day, when purchasing advertisement capacity. The third party specifies a category of the message content, in order to allow the scheduling software 205 to determine whether there is any remaining message inventory available relating to that category of message for the selected scheduling period.

The scheduling server S2 operates under control of scheduling software 205, in association with scheduling rules and parameters held in rules and parameters database DB1.

Inventory database DB2 allocates message inventory to each category and reserves allocations of the message inventory according to preferences that can be set by the operator of the scheduling server S2. The inventory management software 203 updates the inventory database, e.g. as recipients join the system and as recipients change their preferences. Allocations correspond to divisions of the amount of possible messaging events per time unit to N categories with different or equal allocations A₁, A₂, A₃, ...AN for each of the categories. These allocations can also be varied on a per-scheduling period basis, so that the allocation in one category varies over time, in a regular manner such that the pattern is repeated from one sequence of scheduling periods to another.

An exemplary set of allocations for a particular category Aₓ is shown in Figure 3. In this case, the pattern is repeated in a weekly schedule, from one week to the next. The weekly schedule 300 comprises 7 days (Monday, Tuesday... Sunday). The message inventory of each day i.e. the number of available recipients to receive messages multiplied by the number of messages set as the maximum message limit per day, is divided between each of the different categories, in this example three categories A, B, C having respective daily allocations 302, 304 and 306. This means that, for example, on Monday the category allocation 302 is allocated about 30% of the available message inventory; on Tuesday the allocation is different, say 50%, and remains at this level for Wednesday, and is then reduced to about 15% on Thursday etc.

Note that the example illustrated in Figure 3 shows the allocation for a granularity of one day but it can be also for an hour, a minute, a period of a given day such as "afternoon" or "morning", weekly allocations, monthly and yearly allocations depending on selectable settings.

Each allocation has a set of associated categories. An allocation may be associated with only one category, or may be associated with a combination of categories.

A particular item of message content may be assigned to a particular category manually or automatically. In the case of automatic assignment there is according to an embodiment of invention a set of tags associated with each item of message content when it is uploaded to the content database 22. Example of the different message categories are:
<product group> e.g. food, drinks, music, electronics, cars, movies, television shows, concerts, sports, professional, etc.
<target personalities> e.g. music fans, athletics, students, movie fans, food lovers, etc.
<usage situations> e.g. mobile applications, PC applications, clothing, party, free time, night time, etc.

When scheduling transmission of a message content item, the scheduling control system S2 selects a particular pre-set allocation which matches the category, or categories, of the message content item. In the case of there being multiple categories, the selection can be based on best fit, random or round-robin type of allocation.

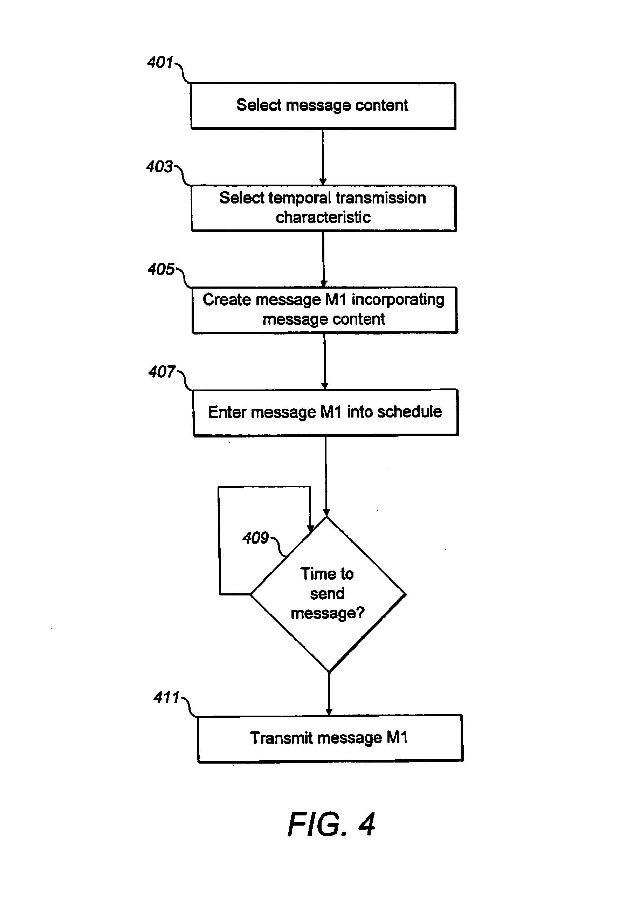

The steps involved in this scheduling process will now be shown with reference to Figure 4: at step 401 the message transmission system S3 selects message content for the recipient(s) based on information stored in the recipient database 18. The message content to be transmitted is selected according a selection algorithm and rules stored in rules database 20, while the messages that are selected for transmission are stored in the content database 20, and in one arrangement are advertisement messages. Having selected the message content, the scheduling system S2 selects the transmission times of the message using message transmission rules stored in rules database 20 (step 403), thereby effectively scheduling transmission of the message content.

Assuming message transmission to have been successfully scheduled, a message M1 from the content database 22 is then formulated at step 405, the message M1 having the content selected at step 401 and a format based on, for example, message sending preference data specified by the recipient. The message M1 can be a discrete message, a tagged communication message, a ring back tone advertisement, an MMS, a WAP push message, an e-mail, Internet content, banner advertisement etc. The message M1 is then entered into a schedule stored in the scheduling database 24 (step 407).

Turning now to aspects of the message transmission process, the message transmission system S3 periodically accesses the scheduling database 24 in order to access the schedules stored therein (step 409). Thus, at the various scheduled times, messages such as message M1, are sent via the communications network 6 (step 411).

Whilst in the above arrangement the message M1 is described as being created by the message transmission system S3, the message content can alternatively be inserted in a message M1 in the manner described in UK patent application GB 2406996, during message transmission. In such an arrangement, a VAS gateway 8 or similar can add message content to messages according on the basis of the transmission times identified at step 403. In this case it will be appreciated that the VAS gateway 8 may be instructed to take in account communication activities and recipient preferences on the timing of the message transmission.

As an alternative to sending the message M1 on the basis of the schedule alone, the message transmission system S3 can additionally factor in additional parameters such as the identity of the message originator, in order to trigger the transmission of the message content to individual recipients at selected transmission times. The additional parameters used to select transmission times may be parameters such as temporal preference data specified by recipients (such as "No messages between 01:00 - 07:00") and/or additional preference data specified by the message originators, historical or real-time network congestion data. Additionally, the message transmission rules may select, from the available recipients, a target community of recipients based on parameters such as recipient profile data identifying preferred category of subject matter, the number of messages which the recipient has already received in the current scheduling period, the time of the last message transmitted, the status of the recipient's terminal (e.g. switched on or off), etc. Also, if a series of messages are scheduled to be transmitted to selected recipients in successive scheduling periods, the selection may be made according to which recipients received a previous message in the series.

In addition to the temporal rules described above, the message transmission system S3 has access to data indicative of actions taken by the terminal 2 in response to receipt of the message M1, and can use these data to determine feedback in respect of the scheduled messages M1. The feedback can be captured via a further monitoring system (not shown), which monitors recipient activity and correlates same with the content of the message M1. The output of the further monitoring system can then be made available to the message transmission system S3 for use in further rules stored in the rules database 20; these may include a rule for example specifying that if a response to a scheduled message is more likely after or during certain communication event(s), then send message M1 after/during that/those event(s). As an alternative, this gathered from user feedback can be incorporated into the message transmission rules used at step 403 to initially schedule delivery of the message content.

A specific example will now be described for the case in which there are 5 recipients (1, 2, 3, 4 and 5) and there are three delivery profiles (on/off profiles) P1, P2, P3.

P1 could, for example, specify sex (male/female), P2 could specify preferences in relation to a particular type of social activity (e.g. likes going out) (having possible values: yes/no), and P3 could specify preference in relation to a particular type of soap (having possible values like/dislike). For the purposes of this example it is assumed that these recipients have entered their preferences in relation to these delivery profiles, and as a result the following data are stored in the subscriber database 18:

**Table 1**

| | P1 | P2 | P3 |
|---|---|---|---|
| 1 | ON | ON | OFF |
| 2 | ON | OFF | ON |
| 3 | ON | ON | OFF |
| 4 | OFF | OFF | OFF |
| 5 | ON | ON | ON |

In addition there are marketing campaigns C1, C2, C3 and C4, each specifying the delivery of one or more messages per campaign. The messages are assumed to be delivered to recipients during the period of one week starting from Monday running until Sunday, and a total of 8 messages per recipient per day can be delivered. This gives a total maximum inventory of 5 x 8 = 40 messages per day, each campaign involving the transmission of 2 messages per day (since there are 4 campaigns).

According to an embodiment of the invention the campaigns C1 ... C4 are tagged by the message transmission system S3 so as to be allocated to one or more of predetermined categories of message content A, B, C as shown in the table below.

**Table 2**

| | A | B | C |
|---|---|---|---|
| C1 | ON | OFF | OFF |
| C2 | ON | OFF | ON |
| C3 | OFF | ON | OFF |
| C4 | ON | OFF | OFF |

Since the majority of the campaigns have been allocated to category A, in a conventional inventory allocation method the recipients would in average receive mostly A category message content, then B, and C category message content (which, as described above, can be advertisements). Assuming that messages are delivered over a 7 day period, there would be a total of 2 x 5 x 7 (C1) + 1 x 5 x 7 (C2) + 2 x 5 x 7 (C4) = 175 A category messages, 2 x 5 x 7 (C3) = 70 B category messages and 1 x 5 x 7 (C2) = 35 C category messages per week (total of 280). This could be divided into a weekly schedule as follows:

**Table 3**

| | Mon | Tue | Wed | Thu | Fri | Sat | Sun | Total |
|---|---|---|---|---|---|---|---|---|
| A | 25 | 25 | 25 | 25 | 25 | 25 | 25 | 175 |
| B | 10 | 10 | 10 | 10 | 10 | 10 | 10 | 70 |
| C | 5 | 5 | 5 | 5 | 5 | 5 | 5 | 35 |

According to embodiments of the invention the recipient profiles and message content categories are conveniently correlated with one another: this is illustrated in the current example, for which recipients with profile P1 are interested in A, B categories (or value the information related to A, B) but not category C, while category B is important to all recipients who have selected profile P1, P2 or/and P3.

**Table 4**

| | A | B | C |
|---|---|---|---|
| P1 | ON | ON | OFF |
| P2 | OFF | ON | ON |
| P3 | ON | ON | OFF |

Since any given recipient is associated with a profile in the manner shown in Table 1, the message content (A, B, C) associated with each recipient can be derived on the basis of the data held within Table 4 (step 401), and the transmission date can thence be selected, at least in part, from the data in Table 3.

As will be appreciated from the foregoing, in addition to using the data in Table 4 to schedule message transmission, embodiments of the invention factor in a preferred distribution of messages to the message scheduling process. For example, and as described above, the percentage of messages in any given category that are to be transmitted on any given day can be specified in the manner shown in Figure 3 or Table 5 (below). Rules can additionally be specified by the party running the message transmission campaign using for example preference information stored in the recipient database 18.

**Table 5**

| | Mon | Tue | Wed | Thu | Fri | Sat | Sun |
|---|---|---|---|---|---|---|---|
| A | 30% | 50% | 50% | 20% | 10% | 25% | 30% |
| B | 40% | 10% | 5% | 60% | 80% | 30% | 20% |
| C | 30% | 40% | 45% | 20% | 10% | 45% | 50% |

Applying the distribution data shown in Table 5, each recipient will then receive messages from different categories in accordance with the allocation shown below:

**Table 6**

| | Mon | Tue | Wed | Thu | Fri | Sat | Sun | Total |
|---|---|---|---|---|---|---|---|---|
| A | 12 | 20 | 20 | 8 | 4 | 10 | 12 | 86 |
| B | 16 | 4 | 2 | 24 | 32 | 12 | 8 | 98 |
| C | 12 | 16 | 18 | 8 | 4 | 18 | 20 | 96 |

This can be compared with conventional (or direct) allocation methods, which are based on direct advertisers requests alone (i.e. the data in Table 3) to give:

**Table 7 - difference between conventional allocations (Table 3) and allocations according to an embodiment of the invention (Table 6).**

| | Mon | Tue | Wed | Thu | Fri | Sat | Sun | Total |
|---|---|---|---|---|---|---|---|---|
| A | 13 | 5 | 5 | 17 | 21 | 15 | 13 | 89 |
| B | -6 | 6 | 8 | -14 | -22 | -2 | 2 | -28 |
| C | -7 | -11 | -13 | -3 | 1 | -13 | -15 | -61 |

Thus when scheduled according to an embodiment of the invention, allocation of messages can be weighted in accordance with predetermined allocations of message content type and/or recipient profiles: in this example, the fact that the B type message content is valued by all profiles can be factored into the allocation process, thereby ensuring that there are more B category message content than there is of A category message content.

It will also be appreciated that scheduling different numbers of messages to different days of the week (for example Friday) could be beneficial since it provides a means of ensuring the recipient is more likely to receive information they value (at a time that they want to receive it) rather than when and what advertisers want to send the message content. For example, there could be an advertiser who wants to purchase the entire inventory of messages on a Friday to send message content relating to soap (profile P3). However, if based on the profiles it appears that most of the recipients prefer going out on a Friday (profile P2) to doing their washing, the soap advertisements on Friday are not likely to add value for the recipients; thus the allocation rules could specify that on Fridays 80% of the message content have to be correspond to the profile P2.

### Additional Details and Alternatives

The above embodiments are to be understood as illustrative examples of the invention and further arrangements are envisaged. For example in addition to scheduling the transmission of messages on the basis of preselected allocations and recipient preferences, the schedule can be drawn up on the basis of recipient-selectable settings such as "send all advertisement messages at time T1"; and/or schedules can be drawn up for groups of recipients; and/or a recipient can elect a recipient and specify that the schedule mirrors that of the elected recipient; and/or a recipient can request that all scheduled messages are transmitted with a selected application or message to a messages delivery system.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A scheduling method for generating a schedule (300) for use in triggering a transmission of message content according to an available inventory (DB2) of messaging events within with a time period, the method comprising:
maintaining category data (A, B, C) identifying one or more message categories;
defining an allocation (302, 304, 306) of part of the inventory to at least one of the message categories (A, B, C);
identifying scheduling data identifying at least one category for first message content to be sent to a plurality of recipients (2) during a predetermined period, wherein the amount of messaging events allocated to a category varies between different pre-determined periods; and
inserting said scheduling data into said schedule (300) for use in triggering the transmission of said first message content to a plurality of recipients according to the allocation defined for the at least one category of the first message content.

2. A method according to claim 1, in which said inventory (DB2) is defined at least partly by a periodic limit of messaging events set for each of said plurality of recipients.

3. A method according to claim 2, wherein said periodic limit is a daily limit.

4. A method according to claim 3, wherein said daily limit is set at a threshold which is under 10 messaging events.

5. A method according to claim 4, wherein said daily limit is set at a threshold which is under 5 messaging events.

6. A method according to any of claims 2 to 5, wherein respective periodic limits are set for each of a plurality of successive periods, and maintained at substantially the same level for each of said successive periods.

7. A method according to any preceding claim, wherein said allocation (302, 304, 306) is a periodic allocation.

8. A method according to claim 7, wherein said allocation (302, 304, 306) is a daily allocation.

9. A method according to claim 7 or 8, wherein respective periodic allocations are defined for a given category for each of a plurality of successive periods and said schedule (300) includes variations in the level of said allocations between at least some of said successive periods.

10. A method according to claim 9, wherein said plurality of successive periods includes at least two sequences of successive periods, and wherein a pattern of the variations in the level of said allocations (302, 304, 206) is repeated within said at least two sequences.

11. A method according to claim 10, wherein said sequences each span a respective weekly period.

12. A method according to any one of the preceding claims, wherein said allocation (302, 304, 306) is defined at least in part on the basis of a recipient profile specifying recipient preference data.

13. A method according to any one of the preceding claims, wherein said allocation (302, 304, 306) is defined at least in part on the basis of one or more observed actions taken by the recipient in response to previously transmitted messages.

14. A method according to claim 13, wherein said observed actions comprise a defined positive response and wherein said allocation is increased in response to observing a said defined positive response.

15. A method according to claim 13 or 14, wherein said observed actions comprise a defined negative response and wherein said allocation is decreased in response to observing a said defined negative response.

16. A method according to any one of the preceding claims, including:
accessing a content storage system (22) arranged to hold content data items; and
transmitting (411) content data for inclusion within a message scheduled for transmission.

17. A method of scheduling the transmission of message content to a plurality of recipients in a communications system, the method comprising conducting a scheduling process to generate a schedule (300) for use in triggering the transmission of message content according to an available inventory (DB2) of messaging events within a time period, the scheduling process comprising:
accessing category data (A, B, C) identifying one or more message categories;
accessing data identifying an allocation (302, 304, 306) of part of the inventory (DB2) to at least one of the message categories;
identifying scheduling data identifying at least one category for first message content to be sent to a plurality of recipients during a predetermined period, wherein the amount of messaging events allocated to a category varies between different pre-determined periods; and
inserting (407) said scheduling data into said schedule (300) for use in triggering the transmission of said first message content to a plurality of recipients according to the allocation defined for the at least one category of the first message content.

18. A scheduling system (S2) for generating a schedule (300) for use in triggering a transmission of message content, the scheduling system comprising:
a storage system (DB2) arranged to store a plurality of messaging events and category data (A, B, C) identifying one or more message categories, each message category having an allocation (302, 304, 306) of said messaging events associated therewith, and
a message scheduling software component (205) arranged:
to identify scheduling data identifying at least one category for first message content to be sent to a plurality of recipients during a predetermined period, wherein the amount of messaging events allocated to a category varies between different pre-determined periods; and
to insert said scheduling data into said schedule (300) for use in triggering the transmission of said first message content to a plurality of recipients according to the allocation of messaging events defined for the at least one category of the first message content,
wherein the allocation of messaging events is associated with an available inventory (DB2) of messaging events within a predetermined time period.

19. A scheduling system according to claim 18, wherein said allocation of messaging events is defined at least partly by a periodic limit of messaging events set for each of said plurality of recipients.

20. A scheduling system according to claim 19, wherein said periodic limit is a daily limit.

21. A scheduling system according to any one of claim 18 to claim 20, wherein the storage system is arranged to modify said allocation of messaging events periodically.

22. A scheduling system according to claim 21, wherein said allocation is a modified daily.

23. A scheduling system according to claim 21 or 22, wherein the storage system is arranged to associate periodic allocations for a given category for each of a plurality of successive periods, and the processing system is arranged to vary the level of said allocations between at least some of said successive periods.

24. A method of transmitting (411) messages to one or more recipients in a communications network, the method comprising:
identifying a schedule (300) defining message transmission periods, at least one message recipient, and identifying message contents for transmission;
at a defined transmission period, transmitting one or more messages comprising said identified content,
in which the transmission time is defined, at least in part, on the basis of category assigned to the message contents, wherein the amount of messaging events allocated to a category varies between different pre-determined periods

25. A method according claim 24, including adjusting the message transmission period on the basis of temporal preference data associated with the message recipient.

26. A method according to claim 24 or claim 25, including transmitting messages to a plurality of recipients and adjusting at least one message transmission time on the basis of temporal preference data associated with selected ones of the recipients.

27. A method according to claim 26, including adjusting the message content on the basis of content preference data associated with selected one or ones of the recipients.

28. A computer program product, or a suit of computer program products, comprising program code means being adapted to perform the steps of any one of claim 1 to claim 17 when the program is run on a computer or on a suite of computers.

29. A computer-readable medium having stored thereon a data structure comprising the computer program product according to claim 28.

## Patentansprüche

1. Planungsverfahren zum Erzeugen eines Plans (300) zur Verwendung beim Auslösen eines Sendens von Nachrichteninhalt gemäß eines verfügbaren Bestands (DB2) von Nachrichtenereignissen innerhalb einer Zeitperiode, wobei das Verfahren aufweist:
Unterhalten von Kategoriedaten (A, B, C), die eine oder mehrere Nachrichtenkategorien identifizieren;
Definieren einer Zuordnung (302, 304, 306) als Teil des Bestands zumindest einer der Nachrichtenkategorien (A, B, C);
Identifizieren von Planungsdaten, die zumindest eine erste Kategorie für zu sendenden Nachrichteninhalt an eine Mehrzahl von Empfängern (2) während einer vorbestimmten Zeitperiode identifizieren, wobei die Anzahl von Nachrichtenereignissen, die einer Kategorie zugeordnet sind, zwischen unterschiedlichen vorbestimmten Zeitperioden variiert; und
Einfügen der Planungsdaten in den Plan (300) zur Verwendung beim Auslösen eines Sendens des ersten Nachrichteninhalts an eine Mehrzahl von Empfängern gemäß der Zuordnung, die für die zumindest eine Kategorie des ersten Nachrichteninhalts definiert ist.

2. Verfahren nach Anspruch 1, in welchem der Bestand (DB2) zumindest teilweise durch eine periodische Beschränkung von Nachrichtenereignissen definiert ist, die für jeden der Mehrzahl von Empfängern gesetzt wird.

3. Verfahren nach Anspruch 2, wobei die periodische Beschränkung eine tägliche Beschränkung ist.

4. Verfahren nach Anspruch 3, wobei die tägliche Beschränkung als ein Schwellwert gesetzt wird, welcher unter 10 Nachrichtenereignisse beträgt.

5. Verfahren nach Anspruch 4, wobei die tägliche Beschränkung als ein Schwellwert gesetzt wird, welcher unter 5 Nachrichtenereignisse beträgt.

6. Verfahren nach irgend einem der Ansprüche 2 bis 5, wobei die jeweiligen periodischen Beschränkungen für jede einer Mehrzahl von aufeinanderfolgenden Perioden gesetzt wird, und auf im Wesentlichen dem gleichen Niveau für jede der aufeinanderfolgenden Perioden aufrechterhalten wird.

7. Verfahren nach irgend einem vorhergehenden Anspruch, wobei die Zuordnung (302, 304, 306) eine periodische Zuordnung ist.

8. Verfahren nach Anspruch 7, wobei die Zuordnung (302, 304, 306) eine tägliche Zuordnung ist.

9. Verfahren nach Anspruch 7 oder 8, wobei jeweilige periodische Zuordnungen für eine gegebene Kategorie für jede einer Mehrzahl von aufeinanderfolgenden Perioden definiert werden und der Plan (300) weist Variationen bei dem Niveau der Zuordnungen zwischen zumindest einigen der aufeinanderfolgenden Perioden auf.

10. Verfahren nach Anspruch 9, wobei die Mehrzahl von aufeinanderfolgenden Perioden zumindest zwei Sequenzen von aufeinanderfolgenden Perioden aufweist, und wobei ein Muster der Variationen bei dem Niveau der Zuordnungen (302, 304, 306) innerhalb von zumindest zwei Sequenzen wiederholt wird.

11. Verfahren nach Anspruch 10, wobei jede der Sequenzen sich über eine jeweilige wöchentliche Periode spannt.

12. Verfahren nach irgend einem der vorhergehenden Ansprüche, wobei die Zuordnung (302, 304, 306) zumindest teilweise auf der Basis eines Empfängerprofils definiert ist, das Empfängerpräferenzdaten spezifiziert.

13. Verfahren nach irgend einem der vorhergehenden Ansprüche, wobei die Zuordnung (302, 304, 306) zumindest teilweise auf der Basis von einer oder mehreren beobachteten Aktionen, die durch den Empfänger in Antwort auf frühere gesendete Nachrichten unternommen wurden, definiert ist.

14. Verfahren nach Anspruch 13, wobei die beobachteten Aktionen eine definierte positive Antwort aufweisen und wobei die Zuordnung in Antwort auf ein Beobachten einer definierten positiven Antwort erhöht wird.

15. Verfahren nach Anspruch 13 oder 14, wobei die beobachteten Aktionen eine definierte negative Antwort aufweisen und wobei die Zuordnung in Antwort auf ein Beobachten einer definierten negativen Antwort verringert wird.

16. Verfahren nach irgend einem der vorhergehenden Ansprüche, aufweisend:
Zugreifen auf ein Inhaltsspeichersystem (22), das eingerichtet ist, um Inhaltsdatenelemente zu halten; und
Senden (411) von Inhaltsdaten zum Einbezug innerhalb einer Nachricht, die zum Senden geplant ist.

17. Verfahren zum Planen des Sendens von Nachrichteninhalt an eine Mehrzahl von Empfängern in einem Kommunikationssystem, wobei das Verfahren ein Durchführen eines Planungsprozesses umfasst, um einen Plan (300) zur Verwendung beim Auslösen des Sendens von Nachrichteninhalt gemäß eines verfügbaren Bestands (DB2) von Nachrichtenereignissen innerhalb der Zeitperiode zu erzeugen, wobei der Planungsprozess aufweist:
Zugreifen auf Kategoriedaten (A, B, C), die eine oder mehrere Nachrichtenkategorien identifizieren;
Zugreifen auf Daten, die eine Zuordnung (302, 304, 306) eines Teils des Bestands (DB2) auf zumindest eine der Nachrichtenkategorien identifizieren;
Identifizieren von Planungsdaten, die zumindest eine erste Kategorie für zu sendenden Nachrichteninhalt an eine Mehrzahl von Empfängern während einer vorbestimmten Zeitperiode identifizieren, wobei die Anzahl von Nachrichtenereignissen, die einer Kategorie zugeordnet sind, zwischen unterschiedlichen vorbestimmten Zeitperioden variiert; und
Einfügen der Planungsdaten in den Plan (300) zur Verwendung beim Auslösen des Sendens des ersten Nachrichteninhalts an eine Mehrzahl von Empfängern gemäß der Zuordnung, die für die zumindest eine Kategorie des ersten Nachrichteninhalts definiert ist.

18. Planungssystem (S2) zum Erzeugen eines Plans (300) zur Verwendung beim Auslösen eines Sendens von Nachrichteninhalt, wobei das Planungssystem aufweist:
ein Speichersystem (DB2), das eingerichtet ist, um eine Mehrzahl von Nachrichtenereignissen und Kategoriedaten (A, B, C), die eine oder mehrere Nachrichtenkategorien identifizieren, zu speichern, wobei jede Nachrichtenkategorie eine Zuordnung (302, 304, 306) der damit assoziierten Nachrichtenereignisse aufweist, und
eine Nachrichtenplanungs-Softwarekomponente (205), die eingerichtet ist:
zum Identifizieren von Planungsdaten, die zumindest eine erste Kategorie für zu sendenden Nachrichteninhalt an eine Mehrzahl von Empfängern während einer vorbestimmten Zeitperiode identifizieren, wobei die Anzahl von Nachrichtenereignissen, die einer Kategorie zugeordnet sind, zwischen unterschiedlichen vorbestimmten Zeitperioden variiert; und
zum Einfügen der Planungsdaten in den Plan (300) zur Verwendung beim Auslösen eines Sendens des ersten Nachrichteninhalts an eine Mehrzahl von Empfängern gemäß der Zuordnung, die für die zumindest eine Kategorie des ersten Nachrichteninhalts definiert ist,
wobei die Zuordnung von Nachrichtenereignissen mit einem verfügbaren Bestand (DB2) von Nachrichtenereignissen innerhalb einer vorbestimmten Zeitperiode assoziiert wird.

19. Planungssystem nach Anspruch 18, wobei die Zuordnung von Nachrichtenereignissen zumindest teilweise durch eine periodische Beschränkung von Nachrichtenereignissen definiert wird, die für jeden der Mehrzahl von Empfängern gesetzt wird.

20. Planungssystem nach Anspruch 19, wobei die periodische Beschränkung eine tägliche Beschränkung ist.

21. Planungssystem nach irgend einem Anspruch 18 bis Anspruch 20, wobei das Speichersystem eingerichtet ist, um die Zuordnung von Nachrichtenereignissen periodisch zu modifizieren.

22. Planungssystem nach Anspruch 21, wobei die Zuordnung täglich modifiziert wird.

23. Planungssystem nach Anspruch 21 oder 22, wobei das Speichersystem eingerichtet ist, periodische Zuordnungen für eine gegebene Kategorie für jede einer Mehrzahl von aufeinanderfolgenden Perioden zu assoziieren, und das Verarbeitungssystem eingerichtet ist, um das Niveau der Zuordnungen zwischen zumindest einigen der aufeinanderfolgenden Perioden zu variieren.

24. Verfahren zum Senden (411) von Nachrichten an einen oder mehrere Empfänger in einem Kommunikationsnetzwerk, wobei das Verfahren aufweist:
Identifizieren eines Plans (300), der Nachrichten-Sendeperioden definiert, bei zumindest einem Nachrichtenempfänger, und Identifizieren von Nachrichteninhalt zum Senden;
bei einer definierten Sendeperiode, Senden einer oder mehrerer Nachrichten, die den identifizierten Inhalt aufweisen,
in welcher die Sendezeit definiert ist, zumindest teilweise, auf der Basis der Kategorie, die den Nachrichteninhalten zugewiesen ist,
wobei die Anzahl von Nachrichtenereignissen, die einer Kategorie zugeordnet ist, zwischen unterschiedlichen vorbestimmten Perioden variiert.

25. Verfahren nach Anspruch 24, umfassend ein Anpassen der Nachrichten-Sendeperiode auf der Basis von temporären Präferenzdaten, die mit dem Nachrichtenempfänger assoziiert sind.

26. Verfahren nach Anspruch 24 oder Anspruch 25, umfassend ein Senden von Nachrichten an eine Mehrzahl von Empfängern und ein Anpassen zumindest einer Nachrichten-Sendezeit auf der Basis von temporären Präferenzdaten, die mit einem ausgewählten der Empfänger assoziiert sind.

27. Verfahren nach Anspruch 26, umfassend ein Anpassen des Nachrichteninhalts auf der Basis der Inhaltspräferenzdaten, die mit einem oder mehreren ausgewählten der Empfänger assoziiert sind.

28. Computerprogrammprodukt, oder eine Reihe von Computerprogrammprodukten, aufweisend ein Programmcodemittel, das eingerichtet ist, um die Schritte von irgend einem Anspruch 1 bis Anspruch 17 auszuführen, wenn das Programm auf einem Computer oder einer Reihe von Computern läuft.

29. Computerlesbares Medium, das darauf eine Datenstruktur gespeichert hat, die das Computerprogrammprodukt nach Anspruch 28 aufweist.

## Revendications

1. Un procédé de planification pour générer un planning (300) pour une utilisation dans le déclenchement d'une émission d'un contenu de message en fonction d'un inventaire disponible (DB2) d'évènements de messagerie à l'intérieur d'une période temporelle, le procédé comprenant :
la conservation de données de catégorie (A, B, C) identifiant une ou plusieurs catégories de messages ;
la définition d'une allocation (302, 304, 306) d'une partie de l'inventaire vers au moins l'une des catégories de messages (A, B, C) ;
l'identification de données de planification identifiant au moins une première catégorie pour un premier contenu de message à envoyer à une pluralité de destinataires (2) durant une période prédéterminée, la quantité d'évènements de messagerie alloués à une catégorie variant entre périodes prédéterminées différentes ; et
l'insertion desdites données de planification dans ledit planning (300) pour une utilisation dans le déclenchement de l'émission dudit premier contenu de message vers une pluralité de destinataires en fonction de l'allocation définie pour la au moins une catégorie du premier contenu de message.

2. Un procédé selon la revendication 1, dans lequel ledit inventaire (DB2) est défini au moins partiellement par une limite périodique d'évènements de messagerie établie pour chacun de ladite pluralité de destinataires.

3. Un procédé selon la revendication 2, dans lequel ladite limite périodique est une limite quotidienne.

4. Un procédé selon la revendication 3, dans lequel ladite limite quotidienne est établie à un seuil qui est inférieur à 10 évènements de messagerie.

5. Un procédé selon la revendication 4, dans lequel ladite limite quotidienne est établie à un seuil qui est inférieur à 5 évènements de messagerie.

6. Un procédé selon l'une des revendications 2 à 5, dans lequel des limites périodiques respectives sont établies pour chacune d'une pluralité de périodes successives, et maintenues substantiellement au même niveau pour chacune desdites périodes successives.

7. Un procédé selon l'une des revendications précédentes, dans lequel ladite allocation (302, 304, 306) est une allocation périodique.

8. Un procédé selon la revendication 7, dans lequel ladite allocation (302, 304, 306) est une allocation quotidienne.

9. Un procédé selon la revendication 7 ou 8, dans lequel les allocations périodiques respectives sont définies pour une catégorie donnée pour chacune d'une pluralité de périodes successives et ledit planning (300) inclut des variations du niveau desdites allocations entre au moins certaines desdites périodes successives.

10. Un procédé selon la revendication 9, dans lequel ladite pluralité de périodes successives comprend au moins deux séquences de périodes successives, et dans lequel un motif des variations du niveau desdites allocations (302, 304, 206) est répété à l'intérieur desdites au moins deux séquences.

11. Un procédé selon la revendication 10, dans lequel lesdites séquences s'étendent chacune sur une période hebdomadaire respective.

12. Un procédé selon l'une des revendications précédentes, dans lequel ladite allocation (302, 304, 306) est définie au moins partiellement sur la base d'un profil de destinataire spécifiant des données de préférence du destinataire.

13. Un procédé selon l'une des revendications précédentes, dans lequel ladite allocation (302, 304, 306) est définie au moins partiellement sur la base d'une ou plusieurs actions observées exécutées par le destinataire en réponse à des messages précédemment transmis.

14. Un procédé selon la revendication 13, dans lequel lesdites actions observées comprennent une réponse positive définie et dans lequel ladite allocation est augmentée en réponse à l'observation d'une telle réponse positive définie.

15. Un procédé selon la revendication 13 ou 14, dans lequel lesdites actions observées comprennent une réponse négative définie et dans lequel ladite allocation est réduite en réponse à l'observation d'une telle réponse négative définie.

16. Un procédé selon l'une des revendications précédentes, comprenant :
l'accès à un système de stockage de contenus (22) configuré pour conserver des rubriques de données de contenu ; et
l'émission (411) de données de contenu pour inclusion à l'intérieur d'un message dont l'émission est planifiée.

17. Un procédé de planification de l'émission de contenu de message vers une pluralité de destinataires dans un système de communication, le procédé comprenant l'exécution d'un processus de planification pour générer un planning (300) pour une utilisation dans le déclenchement de l'émission de contenus de message en fonction d'un inventaire disponible (DB2) d'évènements de messagerie à l'intérieur d'une période temporelle, le processus de planification comprenant :
l'accès à des données de catégorie (A, B, C) identifiant une ou plusieurs catégories de messages ;
l'accès à des données identifiant une allocation (302, 304, 306) d'une partie de l'inventaire (DB2) vers au moins l'une des catégories de messages ;
l'identification de données de planification identifiant au moins une catégorie pour un premier contenu de message à envoyer vers une pluralité de destinataires durant une période prédéterminée, la quantité d'évènements de messagerie alloués à une catégorie variant entre des périodes prédéterminées différentes ; et
l'insertion (407) desdites données de planification dans ledit planning (300) pour une utilisation dans le déclenchement de l'émission dudit premier contenu de message vers une pluralité de destinataires en fonction de l'allocation définie pour la au moins une catégorie du premier contenu de message.

18. Un système de planification (S2) pour générer un planning (300) pour une utilisation dans le déclenchement d'une émission d'un contenu de message, le système de planification comprenant :
un système de stockage (DB2) configuré pour stocker une pluralité d'évènements de messagerie et des données de catégorie (A, B, C) identifiant une ou plusieurs catégories de messages, chaque catégorie de message ayant une allocation (302, 304, 306) desdits évènements de messagerie qui lui sont associés, et
un composant logiciel de planification de messages (205) configuré pour :
identifier des données de planification identifiant au moins une catégorie pour un premier contenu de message à envoyer vers une pluralité de destinataires durant une période prédéterminée, la quantité d'évènements de messagerie alloués à une catégorie variant entre périodes prédéterminées différentes ; et
insérer lesdites données de planification dans ledit planning (300) pour une utilisation dans le déclenchement de l'émission dudit premier contenu de message vers une pluralité de destinataires en fonction de l'allocation des évènements de messagerie définie pour la au moins une catégorie du premier contenu de message,
dans lequel l'allocation des évènements de messagerie est associée à un inventaire disponible (DB2) d'évènements de messagerie à l'intérieur d'une période temporelle prédéterminée.

19. Un système de planification selon la revendication 18, dans lequel ladite allocation d'évènements de messagerie est définie au moins partiellement par une limite périodique d'évènements de messagerie établie pour chacun de ladite pluralité de destinataires.

20. Un système de planification selon la revendication 19, dans lequel ladite limite périodique est une limite quotidienne.

21. Un système de planification selon l'une des revendications 18 à 20, dans lequel le système de stockage est configuré pour modifier ladite allocation des évènements de messagerie de façon périodique.

22. Un système de planification selon la revendication 21, dans lequel ladite allocation est modifiée quotidiennement.

23. Un système de planification selon la revendication 21 ou 22, dans lequel le système de stockage est configuré pour associer des allocations périodiques pour une catégorie donnée pour chacune d'une pluralité de périodes successives, et le système de traitement est configuré pour faire varier le niveau desdites allocations entre au moins certaines desdites périodes successives.

24. Un procédé d'émission (411) de messages vers un ou plusieurs destinataires dans un réseau de communication, le procédé comprenant :
l'identification d'un planning (300) définissant des périodes d'émission de messages, d'au moins un destinataire de message et l'identification de contenus de messages pour l'émission ;
lors d'une période d'émission définie, l'émission d'un ou plusieurs messages comprenant ledit contenu identifié,
dans lequel le temps de transmission est défini, au moins en partie, sur la base d'une catégorie attribuée aux contenus de messages, la quantité d'évènements de messagerie allouée à une catégorie variant entre périodes prédéterminées différentes.

25. Un procédé selon la revendication 24, comprenant l'ajustement de la période d'émission du message sur la base de données de préférence temporelle associées aux destinataires du message.

26. Un procédé selon la revendication 24 ou la revendication 25, comprenant l'émission de messages vers une pluralité de destinataires et l'ajustement d'au moins un temps d'émission de message sur la base de données de préférence temporelle associées à des destinataires sélectionnés parmi lesdits destinataires.

27. Un procédé selon la revendication 26, comprenant l'ajustement du contenu de message sur la base de données de préférence de contenu associées à un destinataire sélectionné ou certains de ces destinataires.

28. Un programme-produit informatique, ou une suite de programmes-produits informatiques, comprenant des moyens de code de programme qui sont adaptés pour mettre en oeuvre les étapes de l'une des revendications 1 à 17 lorsque le programme est exécuté sur un calculateur ou sur une suite de calculateurs.

29. Un support lisible par calculateur sur lequel est stockée une structure de données comprenant le programme-produit informatique selon la revendication 28.
